# EUROPÄISCHE PATENTSCHRIFT

(11) **EP 2 251 223 B1**
(45) Veröffentlichungstag und Bekanntmachung des Hinweises auf die Patenterteilung: **25.12.2013**
(21) Anmeldenummer: 10004742.2
(22) Anmeldetag: 05.05.2010
(51) Int. Cl.: B60K 17/28, B61C 9/10, F16H 3/14

(54) **Antriebsstrang für ein Fahrzeug mit zwei gleichwertigen Fahrtrichtungen**
Power train for a vehicle with two equivalent driving directions
Chaîne cinématique pour un véhicule doté de deux directions d'avancement équivalentes

(30) Priorität: 13.05.2009 DE 102009021141
(43) Veröffentlichungstag der Anmeldung: 17.11.2010
(73) Patentinhaber: Voith Patent GmbH, 89522 Heidenheim (DE)
(72) Erfinder: Weber, Tobias, 89564 Nattheim (DE); Heydel, Stefan, 89520 Heidenheim (DE); Richter, Herbert, 73432 Aalen (DE)
(74) Vertreter: Senft, Stefan Manfred

(56) Entgegenhaltungen:
- EP-A1- 0 965 774
- WO-A1-02/02966
- DE-A1- 10 014 132
- DE-B3-102008 011 386
- GB-A- 2 444 367

## Beschreibung

Die vorliegende Erfindung betrifft einen Antriebsstrang für ein Fahrzeug mit zwei gleichwertigen Fahrtrichtungen, somit insbesondere für ein Schienenfahrzeug, gemäß dem Oberbegriff des Anspruchs 1, wie aus EP 0965774 A bekannt.

Bei Fahrzeugen mit zwei gleichwertigen Fahrtrichtungen, das heißt bei Fahrzeugen, wie beispielsweise Schienenfahrzeugen, die sowohl in eine erste Fahrtrichtung (Vorwärtsrichtung) in sämtlichen Geschwindigkeitsbereichen als auch in eine hierzu entgegengesetzte zweite Fahrtrichtung (Rückwärtsfahrtrichtung) in denselben Geschwindigkeitsbereichen angetrieben durch ihren eigenen Antriebsmotor bewegt werden, wobei beide Fahrtrichtungen gleichwertig genutzt werden können sollen, werden herkömmlich spezielle für diesen Fahrzeugtyp angepasste Getriebe, insbesondere hydrodynamische Getriebe (Turbogetriebe), verwendet, in denen Wendeschalteinheiten integriert sind. Beispielsweise weist ein herkömmlicher Schienenfahrzeugantriebsstrang einen Antriebsmotor, auch Fahrmotor genannt, auf, der im Fahrzeugrahmen aufgehängt ist und an welchem ein Automatgetriebe angeschlossen ist, das dieselben Geschwindigkeitsbereiche und Drehmomente für beide Drehrichtungen der Getriebeabtriebswelle zur Verfügung stellt. Ein solches Automatgetriebe unterscheidet sich daher in seinem Aufbau erheblich von einem Nutzfahrzeuggetriebe, das für Straßenfahrzeuge beziehungsweise allgemein für Fahrzeuge verwendet wird, welche vorrangig eine erste Fahrtrichtung (Vorwärtsrichtung) nutzen und nur selten, zum Beispiel zum Rangieren, eine entgegengesetzte Fahrtrichtung (Rückwärtsrichtung) nutzen, wobei in der entgegengesetzten Fahrtrichtung nicht dieselben Geschwindigkeitsbereiche zur Verfügung stehen.

Ferner ist es bekannt, Wendeschalteinheiten bei Schienenfahrzeugen im sogenannten Radsatzgetriebe vorzusehen, das heißt in einem Getriebe, das auf der Radsatzwelle im Drehgestell angeordnet ist und Antriebsleistung, die ihm über eine Gelenkwelle, insbesondere Tripodegelenkwelle, die in Fahrzeuglängsrichtung verläuft, von dem Automatgetriebe zugeführt wird, auf die in Fahrzeugquerrichtung verlaufende Radsatzwelle beziehungsweise die Antriebsräder überträgt.

Der ersten beschriebenen Ausführungsform nach dem Stand der Technik liegt der Nachteil zugrunde, dass Spezialgetriebe als Wechselgetriebe, insbesondere Automatgetriebe, verwendet werden müssen, die häufig aufgrund einer geringeren Stückzahl in der Produktion teurer sind als vergleichbare Nutzfahrzeugwechselgetriebe. Die zweite beschriebene Ausführungsform nach dem Stand der Technik weist den Nachteil auf, dass auch hier keine Standardradsatzgetriebe, die frei von Wendeschalteinheiten sind, verwendet werden.

Ein weiterer Nachteil ist darin zu sehen, dass Fahrzeuge mit zwei gleichwertigen Fahrtrichtungen, also insbesondere Schienenfahrzeuge, häufig weitere Aggregate benötigen, beispielsweise hydraulische Aggregate, Generatoren für ein Bordnetz, Antriebsaggregate für Klimakompressoren oder dergleichen. Diese benötigen im Allgemeinen einen Nebenabtrieb aus dem Antriebsstrang, um in der gewünschten Art und Weise Energie für weitere Aggregate beziehungsweise Hilfsaggregate zur Verfügung zu stellen. Auch dies ist ein Aufbau, welcher so in Wechselgetrieben, wie sie insbesondere im Nutzfahrzeugbereich eingesetzt werden, häufig nicht der Fall ist. Auch für derartige Nebenabtriebe gilt also das hinsichtlich des Wechselgetriebes oben dargelegte.

Der vorliegenden Erfindung liegt die Aufgabe zugrunde, einen Antriebsstrang für ein Fahrzeug mit zwei gleichwertigen, entgegengesetzten Fahrtrichtungen, insbesondere für ein Schienenfahrzeug, zur Verfügung zu stellen, welcher die Verwendung von einfachen Radsatzgetrieben und Wechselgetrieben, letztere insbesondere auch aus dem Nutzfahrzeugbereich, ermöglicht und die genannten Nachteile vermeidet.

Diese Aufgabe wird in einem gattungsgemäßen Antriebsstrang durch die im kennzeichnenden Teil von Anspruch 1 genannten Merkmale gelöst.

Das Wendegetriebe unabhängig vom Wechselgetriebe ermöglicht insbesondere den Einsatz eines standardisierten Wechselgetriebes, beispielsweise eines Schaltgetriebes oder insbesondere eine Automatgetriebes, wie es aus dem Nutzfahrzeugbereich bekannt und üblich ist. Aufgrund der dort erzielten Stückzahlen können diese Getriebe vergleichsweise günstig hergestellt werden, so dass gegenüber den ansonsten benötigten speziellen Getrieben für Fahrzeuge mit zwei gleichwertigen Fahrtrichtungen ein entscheidender Kostenvorteil entsteht. Außerdem kann durch die Integration des wenigstens einen Nebenabtriebs in dieses unabhängig vom Wechselgetriebe ausgebildete Wendegetriebe der besondere Vorteil erreicht werden, dass auch der Nebenabtrieb unabhängig vom Wechselgetriebe ausgeführt werden kann. Dabei kann sowohl das Wechselgetriebe als auch, im speziellen Fall der Schienenfahrzeuge, das Radsatzgetriebe standardisiert ausgeführt werden und kann unabhängig von den Anforderungen an zwei gleichwertige Fahrtrichtungen und den Antrieb von Nebenaggregaten konzipiert werden.

Der erfindungsgemäße Antriebsstrang bietet also insbesondere unter konstruktiven Aspekten die Möglichkeit, standardisierte Bauelemente in einer Art modularen Bauweise einzusetzen und somit aus in großer Stückzahl vergleichsweise günstig verfügbaren Bauteilen unter Hinzunahme des erfindungsgemäßen Wendegetriebes einen Antriebsstrang aufzubauen, welcher alle Anforderungen die in einem Fahrzeug mit gleichwertigen Fahrtrichtungen, insbesondere einem Schienenfahrzeug, vorliegen erfüllt.

Gemäß einer besonders günstigen Ausgestaltung des Antriebsstrangs ist das Wendegetriebe dabei so ausgebildet, dass die Zahnräder im Wendegetriebe als Stirnräder ausgeführt sind.

Diese Ausgestaltung des erfindungsgemäßen Antriebsstrangs ermöglicht einen sehr kompakten Aufbau des Wendegetriebes, welcher sich leicht in bestehende Bauräume des mit dem Antriebsstrang ausgestatteten Fahrzeugs integrieren lässt. In einer besonders günstigen und vorteilhaften Weiterbildung ist der erfindungsgemäße Antriebsstrang dabei so ausgebildet, dass der wenigstens eine Nebenabtrieb zum Antrieb von weiteren Aggregaten nutzbar ist.

Dieser Aufbau des Antriebsstrangs kann also über den Nebenabtrieb am Wendegetriebe weitere Aggregate antreiben, beispielsweise eine hydrostatische Maschine, welche als Pumpe zur Versorgung von hydraulisch betriebenen Bauteilen, insbesondere Lüftern oder dergleichen dient. Alternativ hierzu sind weitere Aggregate denkbar, beispielsweise Kompressoren, welche als Klimakompressoren genutzt werden können, oder elektrische Maschinen, welche als Generatoren angetrieben werden, um elektrische Energie für das Bordnetz einen solchen Fahrzeugs bereitzustellen.

In einer besonders günstigen Ausgestaltung des erfindungsgemäßen Antriebsstrangs ist es dabei ferner vorgesehen, dass der wenigstens eine Nebenabtrieb zum Einbringen von Leistung durch weitere Aggregate nutzbar ist.

Der erfindungsgemäße Aufbau mit dem Nebenabtrieb kann also nicht nur dazu dienen, über den Nebenabtrieb weitere Aggregate anzutreiben, sondern kann besonders vorteilhaft auch dazu genutzt werden, um Energie in den Antriebsstrang einzubringen. Insbesondere beim Einsatz einer elektrischen Maschine oder einer hydrostatischen Maschine an dem wenigstens einen Nebenabtrieb kann dieser also zur Hybridisierung des Antriebsstrangs genutzt werden. Ist überschüssige Energie vorhanden, so kann über den Nebenabtrieb diese Energie über die Maschine, welche dann als Generator beziehungsweise Pumpe arbeitet, entweder in einem elektrischen Speicher oder in einem Druckspeicher zwischengespeichert werden. In anderen Fällen, wenn zusätzliche Antriebsenergie benötigt wird, beispielsweise für eine Leistungssteigerung oder zum emissionsfreien Anfahren ohne Betrieb des Antriebsmotors, kann über die Speicher und die entsprechende Maschine, welche dann motorisch arbeitet, Leistung wieder zurück in den Antriebsstrang gebracht werden. Ohne dass weitere Komponenten konstruktiv geändert werden müssen, lässt sich so also eine Hybridisierung des Antriebsstrangs einfach und zuverlässig realisieren.

In einer besonders vorteilhaften Weiterbildung der Erfindung ist wenigstens einer der Nebenabtriebe drehfest mit einer mit einem der Zahnräder in dem Wendegetriebe gekoppelten Welle verbunden.

Dieser sehr einfache Aufbau erlaubt es lediglich eine der Wellen, welche die Zahnräder des Wendegetriebes tragen, über ein Gehäuse des Wendegetriebes hinaus zu verlängern und dort, beispielweise über einen Flansch, den Nebenabtrieb bereitzustellen. Dieser Aufbau ist konstruktiv ausgesprochen einfach und erfordert nur einen minimalen zusätzlichen Bauraum im Bereich des Wendegetriebes. Allerdings ist dann die Drehrichtung des Nebenabtriebs abhängig von der aktuell eingestellten Fahrtrichtung des Fahrzeugs, da die Zahnräder in dem Wendegetriebe je nach Fahrtrichtung in unterschiedliche Richtungen drehen. Der Aufbau kann jedoch problemlos überall dort eingesetzt werden, wo als weiteres Aggregat an dem Nebenabtrieb ein Aggregat angekoppelt ist, welches unabhängig von der Drehrichtung arbeitet. Beispielsweise könnte hier ein Retarder angekoppelt sein, welcher als verschleißfreie Dauerbremse in dem Fahrzeug eingesetzt werden kann. Im Allgemeinen sind Retarder zwar drehrichtungsabhängig. Es sind jedoch auch Retarder bekannt und erhältlich, welche unabhängig von der Drehrichtung ihre Wirkung entfalten, sogenannte gerade beschaufelte, hydrodynamische Retarder. Alternativ dazu soll hier außerdem auf eine hydrodynamische Bremsvorrichtung mit Gegenlaufretarder verwiesen werden, welche durch ihren konstruktiven Aufbau unabhängig von der Drehrichtung ausgestaltet ist. Diese ist in der deutschen Patentschrift DE 10 2006 055 679 B3 im Detail beschrieben.

In einer weiteren sehr vorteilhaften Ausgestaltung des erfindungsgemäßen Antriebsstrangs kann es außerdem vorgesehen sein, dass wenigstens einer der Nebenabtriebe drehfest mit der mit dem Ausgang des Wechselgetriebes gekoppelten Welle verbunden ist.

Dieser Aufbau, welcher alternativ oder ergänzend zu dem soeben beschriebenen Nebenabtrieb realisiert sein kann, hat dabei den Vorteil, dass er durch die Kopplung, beispielsweise über eine Kardanwelle oder auch einen hydrodynamischen Kreislauf, mit der Ausgangswelle des Wechselgetriebes immer dieselbe Drehrichtung aufweist. Durch seine Anordnung im oder am Wendegetriebe lässt er die erfindungsgemäßen Vorteil dabei jedoch unberührt. Auch der Nebenabtrieb wird dann, unabhängig, ob er zur Entnahme von Leistung oder zum Einbringen von Leistung genutzt wird, immer dieselbe Drehrichtung aufweisen. Das Wendegetriebe ist im Kraftfluss zu oder von den angetriebenen Rädern des Fahrzeugs dabei immer zwischen den Nebenabtrieb und die angetriebenen Räder geschaltet, so dass der Nebenabtrieb in der über das Wendegetriebe vorgegebene Fahrtrichtung wirkt, ohne dass seine Drehrichtung sich dabei ändert.

Dieser Aufbau kann also insbesondere für Aggregate eingesetzt werden, welche in der einen Drehrichtung eine bessere Funktionalität oder einen besseren Wirkungsgrad aufweisen, als in der anderen Drehrichtung.

Weitere vorteilhafte Ausgestaltungen des erfindungsgemäßen Antriebsstrangs ergeben sich aus den restlichen abhängigen Ansprüchen und werden anhand des Ausführungsbeispiels deutlich, welches nachfolgend unter Bezugnahme auf die Figur näher beschrieben wird.

Dabei zeigen:
- Figur 1: ein stark schematisiert angedeutetes Fahrzeug mit einem Antriebsstrang gemäß der Erfindung;
- Figur 2: ein Wendegetriebe gemäß der Erfindung in einer ersten Ausführungsform; und
- Figur 3: ein Wendegetriebe gemäß der Erfindung in einer alternativen Ausführungsform.

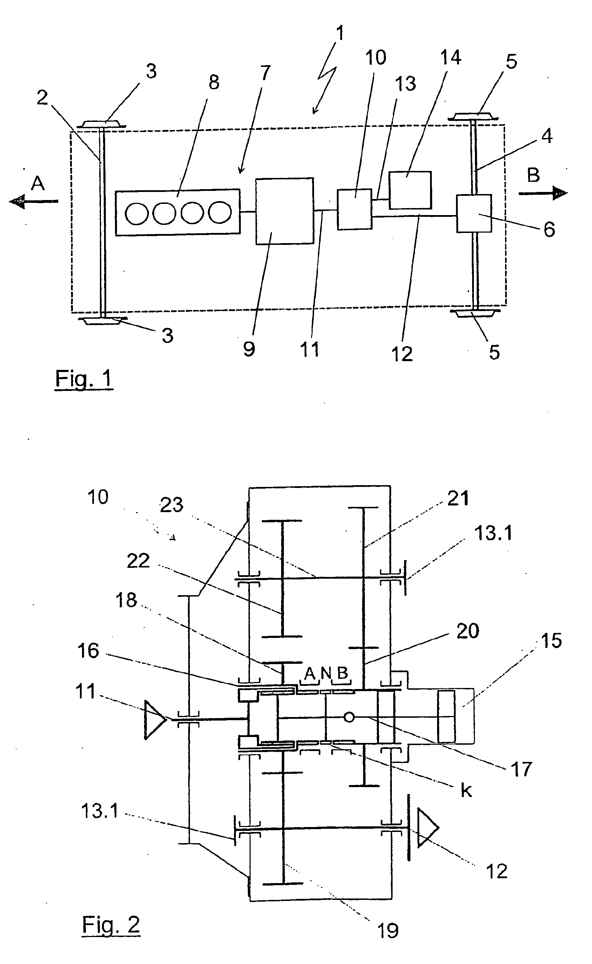

In der Darstellung der Figur 1 ist ein Fahrzeug 1 in einer stark schematisierten Form dargestellt. Bei dem Fahrzeug 1 handelt es sich dabei um ein Fahrzeug mit zwei gleichwertigen Fahrtrichtungen A, B. Insbesondere sind solche Fahrzeuge mit zwei gleichwertigen Fahrtrichtungen A, B im Schienenverkehr eingesetzt, so dass das Fahrzeug 1 in den bevorzugten Ausführungsformen ein Schienenfahrzeug darstellt. Das Fahrzeug 1 weist beispielhaft eine erste Achse 2 mit zwei nicht angetriebenen Rädern 3 und eine zweite Achse 4 mit zwei angetriebenen Rädern 5 auf. Auch dieser Aufbau ist dabei rein beispielhaft zu verstehen, da insbesondere Schienenfahrzeuge im Allgemeinen über mehrere Achsen auf einem Drehgestell verfügen und da hierbei auch häufig mehrere oder alle Achsen angetrieben sind. In dem in Figur 1 dargestellten Ausführungsbeispiel ist die Achse 4 über ein Radsatzgetriebe 6 angetrieben, welches so aus dem allgemeinen Stand der Technik bei Schienenfahrzeugen bekannt ist.

Das Radsatzgetriebe 6 bildet dabei einen Teil eines Antriebsstrangs 7, welcher einen Antriebsmotor 8 und ein Wechselgetriebe 9 aufweist. Der Antriebsmotor 8, welcher auch als Fahrmotor bezeichnet wird, kann dabei in beliebiger Art und Weise ausgeführt sein. Bei Schienenfahrzeugen kommen als Antriebsmotoren 8 jedoch häufig Dieselmotoren zum Einsatz. Der Antriebsmotor treibt nun in das Wechselgetriebe 9, in welchem beispielsweise in mehrere Stufen durch geeignete Getriebeelemente wie Zahnräder, Planetengetriebe und dergleichen, verschiedene Drehzahlen eingestellt werden können. Das Wechselgetriebe 9 kann dabei prinzipiell als rein mechanisches Getriebe ausgebildet sein oder auch als rein hydrodynamisches Getriebe, welches über einen hydrodynamischen Wandler die entsprechenden Drehzahlen bereitstellt. Insbesondere wird das Wechselgetriebe 9 jedoch als ein kombiniert mechanisches/hydrodynamisches Wechselgetriebe 9 ausgebildet sein, welches auch als Differenzialwandlergetriebe oder Turbogetriebe bezeichnet wird. Es verfügt dabei über einen rein mechanischen Zweig der Leistungsübertragung und einen hydrodynamischen Zweig der Leistungsübertragung, welche über entsprechende Getriebeelemente wahlweise getrennt oder gemeinsam verwendet werden können. Besonders bevorzugt handelt es sich dabei um ein Automatgetriebe, welches den Wechsel der Drehzahlen ohne Zugkraftunterbrechung realisiert. Auch das Wechselgetriebe 9 ist so aus dem Stand der Technik bei Fahrzeugen, insbesondere bei Nutzfahrzeugen für Straßenanwendungen, aber auch bei Schienenfahrzeugen bekannt.

Der Antriebsstrang 7 weist außerdem ein Wendegetriebe 10 auf, welches auch als Umkehrgetriebe bezeichnet wird. Dieses Wendegetriebe 10 dient nun dazu, die aus dem Wechselgetriebe 9 immer mit derselben Drehrichtung und der durch das Wechselgetriebe 9 eingestellten gewünschten Drehzahl zur Verfügung stehende Leistung an die gewünschte Fahrtrichtung A oder B des Fahrzeugs 1 anzupassen. Das Wendegetriebe 10 weist dazu eine Eingangswelle 11 auf, welche mit dem Ausgang des Wechselgetriebes 9 verbunden ist. In dem Wendegetriebe 10 wird in später noch detailliert erklärter Art und Weise die Drehrichtung der Antriebsleistung umgekehrt, sofern dies erforderlich ist, so dass an einer Ausgangswelle 12 des Wendegetriebes 10 die gewünschte Drehrichtung für die voreingestellte Fahrtrichtung A oder B anliegt. Außerdem ist in der Darstellung des Antriebsstrangs 7 in der Figur 1 zu erkennen, dass im Bereich des Wendegetriebes 10 über einen Nebenabtrieb 13 weitere Aggregate 14 angekoppelt sein können, auf welche auch später noch detailliert eingegangen wird.

Die Darstellung der Figur 2 zeigt eine schematische Darstellung des Wendegetriebes 10. Über zwei Dreiecke sind dabei die Eingangswelle 11 und die Abtriebswelle 12 symbolisch angedeutet. Das Wendegetriebe 10 weist einen Schaltzylinder 15 auf, welcher in der Darstellung der Figur 2 in einer Neutralstellung N gezeigt ist. Dieser Schaltzylinder 15 kann insbesondere über Öldruck geschaltet werden und verschiebt eine über eine Verzahnung 16 drehfest mit der Eingangswelle 11 verbundene Welle 17 so, dass eine Kupplungsverzahnung K beispielsweise mit einem ersten Zahnrad 18 in Verbindung steht, welches mit einem zweiten Zahnrad 19 kämmt und die Abtriebswelle 12 des Wendegetriebes 10 direkt antreibt. In dem in Figur 2 dargestellten Ausführungsbeispiel würde die Welle 17 dafür durch den Schaltzylinder 15 in Richtung der Eingangswelle 11 aus der hier dargestellten Neutralstellung N heraus in die Stellung A verschoben. Soll die Drehrichtung an der Abtriebswelle 12 des Wendegetriebes 10 nun umgekehrt werden, so wird der Schaltzylinder 15 in die entgegengesetzte Richtung, also weg von der Eingangswelle 11 bewegt. Die Verzahnung 16 stellt auch dann noch eine drehfeste Verbindung der Welle 17 mit der Eingangswelle 11 sicher. Durch dieses Verschieben greift nun jedoch die Kupplungsverzahnung k der Welle 17 nicht mehr in eine Verzahnung des Zahnrads 18 ein, sondern in eine Verzahnung eines weiteren Zahnrads 20, welches die Wenderäder 21 und 22 antreibt, welche auf einer gemeinsamen Welle 23 angeordnet sind. Das Wenderad 22 steht außerdem in einer hier nicht dargestellten Ebene im Eingriff mit dem zweiten Zahnrad 19, so dass auch über die Wenderäder 21, 22 ein Antrieb des Zahnrads 19 und damit ein Antrieb der Abtriebswelle 12 erfolgt. Aufgrund der um eins abweichenden Anzahl der in dieser Schaltstellung B des Wendegetriebes 10 aktiven Zahnräder wird dabei die Drehrichtung gegenüber der zuvor erläuterten Schaltstellung A im Bereich der Abtriebswelle 12 umgekehrt.

Wie bereits in der Figur 1 dargestellt ist, weist das Wendegetriebe 10 nun zusätzlich den Nebenabtrieb 13 auf. In dem in Figur 2 dargestellten Ausführungsbeispiel sind zwei solche Nebenabtriebe 13.1 und 13.2 dargestellt. Aufgrund der Tatsache, dass das zweite Wenderad 22 mit dem zweiten Zahnrad 19 in einer hier nicht dargestellten Ebene kämmt, ist es so, dass unabhängig von der Schaltstellung der Kupplungsverzahnung k sich alle Zahnräder in dem Wendegetriebe 10 immer drehen. Daher kann sowohl über den Nebenabtrieb 13.1 als auch über den Nebenabtrieb 13.2 eine Kopplung weiterer Aggregate 14 mit dem Antriebsstrang 7 erfolgen. Die weiteren Aggregate 14 können dabei sowohl Leistung aus dem Antriebsstrang zu ihrem eigenen Antrieb entnehmen, beispielsweise um einen Generator zur Bordnetzversorgung oder eine Hydraulikpumpe zum Antrieb von hydraulischen Lüftern oder dergleichen anzutreiben. Ebenso ist es denkbar Kompressoren, wie sie beispielsweise für die Klimatisierung oder pneumatische Systeme benötigt werden, über den Nebenabtrieb 13 anzutreiben. Selbstverständlich ist es auch denkbar, Kompressoren anzutreiben, welche die Ladeluft für den Antriebsmotor 8 verdichten können.

Neben dieser Möglichkeit, verschiedene Aggregate 14 über den oder die Nebenabtriebe 13.1, 13.2 anzutreiben, besteht selbstverständlich auch die Möglichkeit, Leistung von einem weiteren Aggregat 14 über den wenigstens einen Nebenantrieb 13.1, 13.2 in das Wendegetriebe 10 und damit in den Antriebsstrang 7 einzubringen. So kann beispielsweise eine Hybridisierung des Antriebsstrangs 7 durch eine diesel-elektrische Hybridisierung oder auch eine diesel-hydrostatische Hybridisierung vorgenommen werden. Im Fall einer elektrischen Hybridisierung koppelt an wenigstens einem der Nebenabtriebe 13 dann eine elektrische Maschine, welche je nach Fahrzustand entweder generatorisch betrieben wird, um elektrische Energie bereitzustellen und diese zumindest zum Teil in einer Speichereinrichtung, beispielsweise einer Batterie, einem Hochleistungskondensator oder auch einer Kombination dieser Bauelemente einzuspeichern. In Betriebszuständen, in denen zusätzliche Leistung benötigt wird, kann dann über die elektrische Maschine im motorischen Betrieb elektrische Leistung aus dieser Speichereinrichtung in mechanische Leistung umgesetzt werden, welche dann über den wenigstens einen Nebenabtrieb 13 in den Abtriebsstrang 7 eingebracht werden kann.

Im Falle eines hydrostatischen Hybrids wäre dies in etwa vergleichbar, nur dass anstelle der elektrischen Maschine eine hydrostatische beziehungsweise hydraulische Maschine eingesetzt werden würde. Diese würde bei entsprechendem Energieüberschuss, wie er beispielsweise beim Abbremsen eines solchen Fahrzeugs entsteht, über den wenigstens ein Nebenabtrieb 13 entsprechend angetrieben. Zumindest ein Teil der dabei erzeugten Energie würde in Form von unter Druck stehendem Arbeitsmedium in einen Druckspeicher eingespeichert. In späteren Betriebssituationen, in denen zusätzliche Leistung benötigt wird, könnte dann über einen motorischen Betrieb der hydraulischen Maschine diese Druckenergie aus dem Druckspeicher wieder in Antriebsenergie umgewandelt werden, welche über den Nebenabtrieb 13 in den Antriebsstrang 7 eingeleitet werden kann.

Eine weitere Alternative hierzu wäre die Nutzung von Antriebsenergie aus in dem Fahrzeug 1 vorhandenen Wärmequellen, indem die thermische Energie in einem Dampfprozess in Dampf umgewandelt wird, um über einen Dampfmotor oder eine Turbine dann mechanische Leistung zur Verfügung zu stellen. Diese zusätzliche Leistung kann über wenigstens einen der Nebenabtriebe 13 dem Triebstrang 7 zugeführt werden. Alternativ oder ergänzend wären hier auch Turbocompoundsysteme denkbar, wie sie insbesondere aus dem Bereich der Nutzfahrzeuge bekannt sind. Bei derartigen Turbocompoundsystemen wird in dem Abgas des Antriebsmotors 8 vorliegende Energie genutzt, um eine Turbine zu treiben, welche dann wiederum mechanisch auf den Antriebsstrang treibt. Dies könnte hier insbesondere an einem der Nebenabtriebe 13 erfolgen.

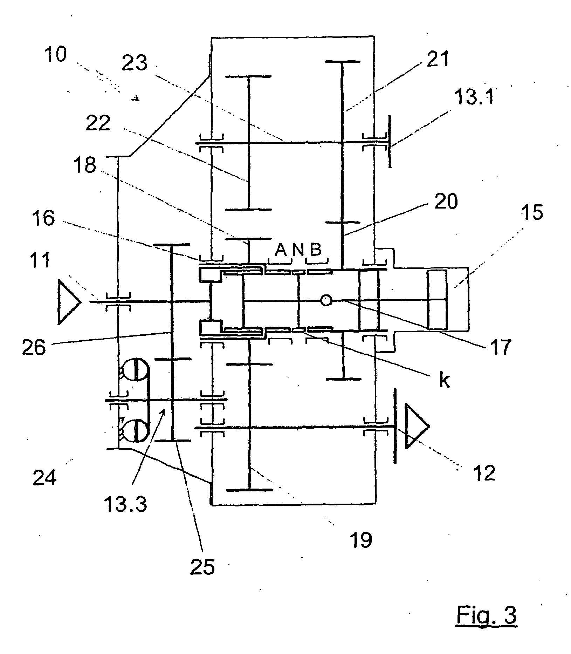

Letztlich kann wenigstens einer der Nebenabtriebe 13 auch dazu genutzt werden, eine verschleißfreie Dauerbremse anzutreiben. Derartige verschleißfreie Dauerbremsen sind aus dem Bereich der Fahrzeugtechnik an sich bekannt. Mögliche Ausführungsformen wären beispielsweise eine Wirbelstrombremse oder insbesondere ein hydrodynamischer Retarder, welcher in der Fahrzeugtechnik allgemein üblich und sehr verbreitet ist. Ein solcher hydrodynamischer Retarder 24 ist beispielhaft in der Darstellung der alternativen Ausführungsform des Wendegetriebes 10 in Figur 3 zu erkennen.

Das Wendegetriebe 10 in der Darstellung der Figur 3 entspricht im Wesentlichen dem in Figur 2 dargestellten Wendegetriebe, wobei auch hier wieder ein erster Nebenabtrieb 13.1 durch einen Flansch angedeutet ist und mit einem beliebigen der oben genannten Aggregate verbunden werden kann. Der zweite Nebenabtrieb 13.3 ist in diesem Ausführungsbeispiel über zwei Zahnräder 25, 26 realisiert, welche mit der Eingangswelle 11 und der Welle 17 drehfest verbunden sind. Diese stellen den Nebenabtrieb 13.3 dar, welcher im hier dargestellten Ausführungsbeispiel den Retarder 24 antreibt. Dieser Retarder 24 dient dabei als verschleißfreie Dauerbremse, um überschüssige Energie aus dem Antriebsstrang 7 beim Abbremsen des Fahrzeugs 1 abzubauen.

Der wesentliche Unterschied im Nebenabtrieb 13.3 gegenüber den zuvor gezeigten Nebenabtrieben 13.1 und 13.2 liegt nun darin, dass der Nebenabtrieb 13.3 immer dieselbe Drehrichtung aufweist, unabhängig von der Fahrtrichtung A, B des Fahrzeugs 1. Die Nebenabtriebe 13.1 an der gemeinsamen Welle 23 der Wenderäder 21, 22 und der Nebenabtrieb 13.2 an der Welle des zweiten Zahnrads 19 drehen dagegen je nach Fahrtrichtung A, B des Fahrzeugs 1 in unterschiedliche Richtungen. Werden nun Aggregate 14 eingesetzt, welche in ihrer Funktionalität und/oder ihrem Wirkungsgrad Vorteile aufweisen, wenn sie lediglich in eine Drehrichtung betrieben werden, dann kann die Ausführungsform gemäß Figur 3 mit dem Nebenabtrieb 13.3 besonders günstig sein. Wird jedoch ein Aggregat 14 eingesetzt, welches unabhängig von der Drehrichtung eine annähernd gleiche Funktionalität aufweist, beispielsweise der in der Beschreibungseinleitung beschriebene Gegenlaufretarder in der Ausführung gemäß der DE 10 2006 055 679 B3, dann kann problemlos auch einer der Nebenabtriebe 13.1 öder 13.2 verwendet werden.

Unabhängig von der Ausgestaltung der Nebenabtriebe 13 mit sich verändernder Drehrichtung oder konstanter Drehrichtung sind diese entweder unmittelbar in oder an das Wendegetriebe 10 integriert oder in einem Gehäuse untergebracht, welches mit dem Gehäuse des Wendegetriebes zu einer Einheit verbunden ist.

Nun kann der Antriebsstrang 7 des Fahrzeugs 1 zuerst weitgehend unabhängig von der Tatsache, dass hier ein Fahrzeug mit zwei gleichwertigen Fahrtrichtungen vorliegt, welches darüber hinaus Nebenabtriebe 13 für Aggregate beziehungsweise Hilfsaggregate 14 benötigt, geplant werden. In den so geplanten und mit entsprechend günstigen Komponenten, welche beispielsweise aus dem Nutzfahrzeugbereich von Straßenfahrzeugen stammen und in großer Stückzahl kostengünstig verfügbar sind, wird dann durch die Integration des sehr einfachen und kompakten Wendegetriebes 10 mit integriertem Nebenabtrieb 13 ein an die speziellen Anforderungen des Fahrzeugs 1 angepasster Antriebsstrang 7. Dies ist gegenüber dem kompletten Aufbau eines maßgeschneiderten Antriebsstrangs für ein Fahrzeug 1 mit zwei gleichwertigen Fahrtrichtungen deutlich einfacher und kostengünstiger zu realisieren.

Der Aufbau des Wendegetriebes 10 über die Stirnräder 18, 19, 20, 21 und 22 ermöglicht dabei einen sehr kompakten Aufbau, welcher an annähernd beliebiger Stelle in dem Fahrzeug in den Antriebsstrang 7 integriert werden kann. So kann dieser beispielsweise unmittelbar nach dem Wechselgetriebe 9 angeordnet werden oder auch im Bereich des Radsatzgetriebes 6 oder an einer beliebigen Stelle zwischen diesen beiden Getrieben 6, 9. Da die beispielsweise bei Nutzfahrzeugen im Straßenbereich üblichen Wechselgetriebe 9 über keinen oder allenfalls einen Nebenabtrieb verfügen, kann durch die Integration der (weiteren) Nebenabtriebe 13 in das speziell für diese Art von Fahrzeug vorzusehende Wendegetriebe 10 auch hierauf reagiert werden, da die benötigten Aggregate 14, beispielsweise zur Hybridisierung oder zur Versorgung des Fahrzeugs 1 mit Hilfsenergie für verschiedene Anwendungen einfach und problemlos über den Einsatz des Wendegetriebes 10 realisiert werden können. Außerdem kann auch der Einsatz einer verschleißfreien Dauerbremse über den wenigstens einen Nebenabtrieb 13 des Wendegetriebes 10 einfach und effektiv realisiert werden.

## Patentansprüche

1. Antriebsstrang für ein Fahrzeug mit zwei gleichwertigen Fahrtrichtungen, mit
1.1 einem Antriebsmotor (8);
1.2 einem Wechselgetriebe (9);
1.3 einem sekundärseitigen Wendegetriebe (10) zum Umkehren der Fahrtrichtung, mit
1.4 einer mit dem Ausgang des Wechselgetriebes (9) gekoppelten Welle (11), welche schaltbar mit je einem von zwei Zahnrädern (18,20) im Eingriff steht, wobei
1.5 von dem einen der Zahnräder (18) eine Abtriebswelle (12) des Wendegetriebes direkt und von dem anderen der Zahnräder (20) über wenigstens ein weiteres Zahnrad als Wenderad (22) angetrieben ist,
1.6 wenigstens einem Aggregat (14);
1.7 das Wendegetriebe (10) ist unabhängig vom Wechselgetriebe (9) ausgebildet,
**dadurch gekennzeichnet, dass**
1.8 am Wendegetriebe (10) wenigstens ein Nebenabtrieb (13, 13.1, 13.2, 13.3) angeordnet ist, der zum Antrieb des wenigstens einen Aggregats (14) und/oder zum Einbringen von Leistung durch das wenigstens eine Aggregat (14) in den Antriebsstrang dient.

2. Antriebsstrang nach Anspruch 1, **dadurch gekennzeichnet, dass** die Zahnräder (18, 19, 20, 21, 22) im Wendegetriebe (10) als Stirnräder ausgebildet sind.

3. Antriebsstrang nach Anspruch 1 oder 2, **dadurch gekennzeichnet, dass** wenigstens einer der Nebenabtriebe (13, 13.1, 13.2, 13.3) drehfest mit einer mit einem der Zahnräder (19, 21, 22) in dem Wendegetriebe (10) gekoppelten Welle (23, 12) verbunden ist.

4. Antriebsstrang nach einem der Ansprüche 1 bis 3, **dadurch gekennzeichnet, dass** wenigstens einer der Nebenabtriebe (13, 13.1, 13.2, 13.3) drehfest mit der mit dem Ausgang des Wechselgetriebes (9) gekoppelten Welle (11, 17) verbunden ist.

5. Antriebsstrang nach einem der Ansprüche 1 bis 4, **dadurch gekennzeichnet, dass** als wenigstens eines der Aggregate (14) eine elektrische Maschine vorgesehen ist.

6. Antriebsstrang nach einem der Ansprüche 1 bis 5, dadurch gekenntzeichnet, dass als wenigstens eines der Aggregate (14) eine hydrostatische Maschine vorgesehen ist.

7. Antriebsstrang nach einem der Ansprüche 1 bis 6, **dadurch gekennzeichnet, dass** als wenigstens eines der Aggregate (14) ein Kompressor vorgesehen ist.

8. Antriebsstrang nach einem der Ansprüche 1 bis 7, **dadurch gekennzeichnet, dass** als wenigstens eines der Aggregate (14) eine verschleißfreie Dauerbremse vorgesehen ist.

9. Antriebsstrang nach Anspruch 8, **dadurch gekennzeichnet, dass** die verschleißfreie Dauerbremse als hydrodynamischer Retarder (24) ausgebildet ist.

10. Antriebsstrang nach einem der Ansprüche 1 bis 8, **dadurch gekennzeichnet, dass** als wenigstens eines der Aggregate (14) ein Dampfmotor vorgesehen ist.

11. Antriebsstrang nach einem der Ansprüche 1 bis 10, **dadurch gekennzeichnet, dass** das Wechselgetriebe (9) als hydrodynamisch/mechanisches Getriebe ausgebildet ist.

12. Antriebsstrang nach einem der Ansprüche 1 bis 11, **dadurch gekennzeichnet, dass** der wenigstens eine Nebenabtrieb (13, 13.1, 13.2, 13.3) in das Wendegetriebe (10) integriert ausgeführt oder mit dem Wendegetriebe (10) fest verbunden ausgeführt ist.

13. Antriebsstrang nach einem der Ansprüche 1 bis 12, **dadurch gekennzeichnet, dass** das Fahrzeug (1) als Schienenfahrzeug ausgebildet ist.

## Claims

1. A drive train for a vehicle fitted with two equivalent driving directions,
1.1 a drive motor (8);
1.2 a variable speed transmission (9);
1.3 a secondary reversing transmission (10) for reversing the driving direction,
1.4 a shaft (11) coupled to the output of the variable speed transmission (9), which is meshed with one respectively of two toothed gears (18, 20) in a switchable manner, whereas
1.5 an output shaft of the reversing transmission is driven directly by one of said toothed gears (18) and by the other toothed gear (20) via at least one other toothed gear acting as a reversing gear (22),
1.6 at least one unit (14);
1.7 the reversing transmission (10) is designed independently of the variable speed transmission (9),
**characterised in that**
1.8 at least one auxiliary power takeoff (13, 13.1, 13.2, 13.3) is arranged on the reversing transmission, which is used for driving said at least one unit (14) and/or for introducing power through said at least one unit (14) into the drive train.

2. A drive train according to claim 1, **characterised in that** the toothed gears (18, 19, 20, 21, 22) are designed as spur gears in the reversing transmission (10).

3. A drive train according to claim 1 or 2, **characterised in that** least one of the auxiliary power takeoffs (13, 13.1,13.2, 13.3) is connected in a torque-proof manner with a shaft (23, 12) coupled to one of the toothed gears (19, 21, 22) in the reversing transmission (10).

4. A drive train according to one of the claims 1 to 3, **characterised in that** least one of the auxiliary power takeoffs (13, 13.1, 13.2, 13.3) is connected in a torque-proof manner with a shaft (11, 17) coupled to the output of the variable speed transmission (9).

5. A drive train according to one of the claims 1 to 4, **characterised in that** an electrical machine is provided as at least one of the units (14).

6. A drive train according to one of the claims 1 to 5, **characterised in that** a hydrostatic machine is provided as at least one of the units (14).

7. A drive train according to one of the claims 1 to 6, **characterised in that** a compressor is provided as at least one of the units (14).

8. A drive train according to one of the claims 1 to 7, **characterised in that** a wear-free continuous brake is provided as at least one of the units (14).

9. A drive train according to claim 8, **characterised in that** the wear-free continuous brake is designed as a hydrodynamic retarder (24).

10. A drive train according to one of the claims 1 to 8, **characterised in that** a steam engine is provided as at least one of the units (14).

11. A drive train according to one of the claims 1 to 10, **characterised in that** the variable speed transmission (9) is designed as a hydrodynamic/mechanical transmission.

12. A drive train according to one of the claims 1 to 11, **characterised in that** said at least one auxiliary power takeoff (13, 13.1, 13.2, 13.3) is integrated into the reversing transmission (10) or is connected fixedly to the reversing transmission (10).

13. A drive train according to one of the claims 1 to 12, **characterised in that** the vehicle (1) is designed as a track vehicle.

## Revendications

1. Train d'entraînement pour véhicule présentant deux directions de conduite équivalentes,
1.1 un moteur d'entraînement (8);
1.2 une transmission à vitesse variable (9);
1.3 une transmission d'inversion côté secondaire (10) pour inverser la direction de conduite,
1.4 un arbre (11) couplé à la sortie de la transmission à vitesse variable (9), qui est engrené de manière embrayable avec l'une respective de deux roues dentées (18, 20), où
1.5 un arbre de sortie de la transmission d'inversion est entraîné directement par l'une des roues dentées (18) et par l'intermédiaire d'une autre route dentée faisant office de roue d'inversion (22) par l'autre des roues dentées (20),
1.6 au moins une unité (14);
1.7 la transmission d'inversion (10) est de conception indépendante de la transmission à vitesse variable (9),
**caractérisé en ce que**
1.8 au moins un entraînement auxiliaire (13, 13.1, 13.2, 13.3) est prévu, servant à l'entraînement de ladite au moins une unité (14) et/ou à l'intrdocution de puissance à travers ladite au moins une unité (14) dans le train d'entraînement.

2. Train d'entraînement selon la revendication 1, **caractérisé en ce que** les roues dentées (18, 19, 20, 21, 22) sont sous forme de pignons droits.

3. Train d'entraînement selon la revendication 1 ou 2, **caractérisé en ce qu'**au moins l'un des entraînements auxiliaires (13, 13.1,13.2, 13.3) est connecté avec blocage en rotation à un arbre (23, 12) couplé à l'une des roues dentées (19, 21, 22) dans la transmission d'inversion (10).

4. Train d'entraînement selon l'une des revendications 1 à 3, **caractérisé en ce qu'**au moins l'un des entraînements auxiliaires (13, 13.1, 13.2, 13.3) est connecté avec blocage en rotation à l'arbre (11, 17) couplé à la sortie de la transmission à vitesse variable (9).

5. Train d'entraînement selon l'une des revendications 1 à 4, **caractérisé en ce qu'**un motor électrique est prévu comme au moins l'une des unités (14).

6. Train d'entraînement selon l'une des revendications 1 à 5, **caractérisé en ce qu'**une machine hydrostatique est prévue comme au moins l'une des unités (14).

7. Train d'entraînement selon l'une des revendications 1 à 6, **caractérisé en ce qu'**un compresseur est prévu comme au moins l'une des unités (14).

8. Train d'entraînement selon l'une des revendications 1 à 7, **caractérisé en ce qu'**un frein permanent sans usure est prévu comme au moins l'une des unités (14).

9. Train d'entraînement selon la revendication 8 **caractérisé en ce que** le frein permanent sans usure est sous forme de retardateur hydrodynamique (24).

10. Train d'entraînement selon l'une des revendications 1 à 8, **caractérisé en ce qu'**un moteur à vapeur est prévu comme au moins l'une des unités (14).

11. Train d'entraînement selon l'une des revendications 1 à 10, **caractérisé en ce que** la transmission à vitesse variable (9) est sous forme de transmission hydrodynamique/mécanique.

12. Train d'entraînement selon l'une des revendications 1 à 11, **caractérisé en ce que** ledit au moins un entraînement auxiliaire (13, 13.1, 13.2, 13.3) est intégré à la transmission d'inversion (10) ou bien est solidarisé de la transmission d'inversion (10).

13. Train d'entraînement selon l'une des revendications 1 à 12, **caractérisé en ce que** le véhicule (1) est sous forme de véhicule sur rails.
